# EUROPEAN PATENT APPLICATION

(11) **EP 1 721 766 A1**
(43) Date of publication of application: **15.11.2006**
(21) Application number: 06380111.2
(22) Date of filing: 12.05.2006
(51) Int. Cl.: B60H 1/34

(54) **Ventilator with directionable air vents and diffusing air vents**

(30) Priority: 13.05.2005 ES 200501164
(71) Applicant: Maier, S. Coop., 48300 Gernika (ES)
(72) Inventor: Mandaluniz Bilbao, Joseba, 48300 Gernika (ES)
(74) Representative: Urteaga Simarro, José Antonio

(57) **Abstract**

Ventilator (1) that comprises both diffusing air vents (4) and directionable air vents (3), with the functioning mode of the ventilator (1) through the first (3) and/or the latter (4) regulatable through a single external control (6) for each sub-assembly (21) of air vents (3, 4), so that through said external control (6) a selection can be made as to whether the ventilator (1) emits a diffuse and soft air through the diffusing air vents (4) or an oriented and potentially more powerful air through the directionable air vents (3), or through both simultaneously, or through neither. The ventilator (1) comprises a series of panels in its interior the position of which varies when the external control (6) is operated and permits the configuration of the ventilator (1) for the different functioning modes.

## Description

### Technical field

The invention relates to a ventilator of the type used in a motor vehicle ventilation system such as air vents through which air can be introduced into the vehicle passenger compartment in a variable direction and strength.

### Prior art

Ventilators are devices that act as air vents in the ventilation system of a motor vehicle and which have traditionally had to meet a series of functional requirements, such as permitting the regulation of the strength and the direction of the air emitted towards the vehicle passenger compartment. For this reason, ventilators comprise a series of slats capable of rotating in order to direct the emitted air and which can be operated by some kind of control accessible from the compartment.

These ventilators provided with directionable slats thus permit the creation of a highly oriented air vent, in other words an air vent originating from the ventilator and directed towards a very specific area of the vehicle passenger compartment. As the emission of air is highly oriented, the air can be emitted at great strength.

On another hand, vehicle passenger compartments are now being fitted with a second type of ventilator with less oriented and more diffuse air vents, in which the air is not emitted in an oriented and potentially powerful manner, but is emitted in a more diffuse manner. This type of ventilator is installed, fundamentally, in the top part of the dashboard, on the fascia or dashboard, and even on the rear of the central consoles (this last installation being generally available in top-of-the-range vehicles).

### Brief description of the invention

It is an object of this invention to provide a vehicle ventilator that integrates at least one directionable air vent and at least one diffusing air vent, the first being an air vent provided with slats and the second an air vent provided with a diffusing front the diffusing character of which is provided by diffusing elements preferably made in the form of holes.

It is another object of this invention to provide a ventilator that presents a single control to regulate the functioning of the two types of vent, so that by means of said single control it is possible to select the emission of air only through the directionable air vent, or only through the diffusing air vent, or through both the diffusing air vent and the directionable air vent, and to even close the ventilator so that air is not emitted through either of the two types of air vent.

The ventilator regulates, through conventional transmission mechanisms, the disposition of a series of panels distributed in the interior of the ventilator, as can be seen in detail in the figures accompanying this description.

A mixed ventilator according to the invention is preferably situated in the area of the compartment closest to the users, as ventilators with directionable air vents are situated at the moment, and permits the user to have at their disposal more powerful and oriented air or less powerful and more diffuse air, depending on their particular preferences. In this way, it is possible to prevent certain uncomfortable situations, it being possible, for example, to replace very cold and powerful jets of air conditioning produced when the air conditioning first starts to operate with diffuse emissions of cool and more pleasant air.

### Brief description of the figures

Details of the invention can be seen in the accompanying non-limiting drawings:
- Figure 1 shows a view in perspective of an embodiment of the inventive ventilator.
- Figures 2A, 2B and 2C show diagrams of the interior of an embodiment of an inventive ventilator sub-assembly.
- Figures 3A, 3B and 3C show diagrams of the interior of another embodiment of an inventive ventilator sub-assembly.
- Figures 4A, 4B, 4C and 4D show diagrams of the interior of another embodiment of an inventive ventilator sub-assembly.
- Figures 5A, 5B and 5C show diagrams of the interior of another embodiment of an inventive ventilator sub-assembly.
- Figures 6A, 6B, 6C and 6D show diagrams of the interior of another embodiment of an inventive ventilator sub-assembly.
- Figures 7 and 8 show two views of a ventilator of the type represented in Figures 3A to 3C.

### Detailed description of the invention

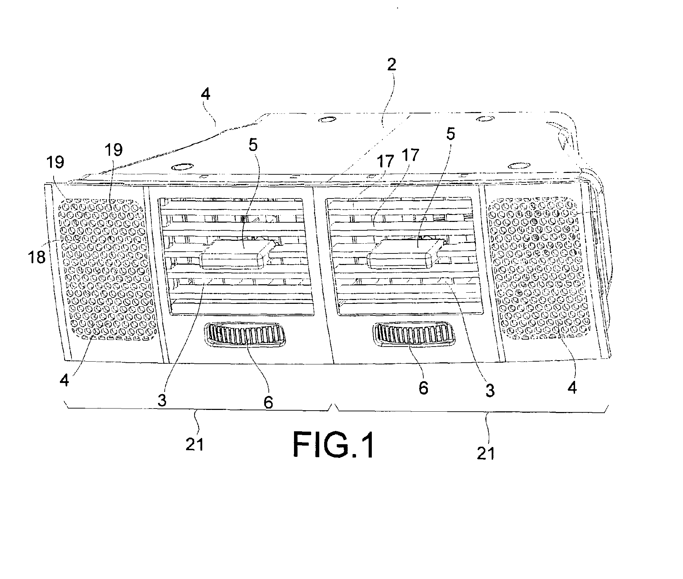

Figure 1 shows a perspective of an embodiment of the inventive ventilator (1), in which the ventilator (1) takes the form of a central ventilator, of those situated on the fascia or dashboard and designed to emit air towards both the vehicle driver area and the vehicle passenger area, and of those provided with independent control sets (5, 6) for the driver and passenger.

The ventilator (1) of the figure comprises a common air passage space (2) that transports the air towards the vehicle passenger compartment, and which ends in two diffusing air vents (4) and two directionable air vents (3). The diffusing air vents (4) emit the air originating from the common air passage space (2) towards the compartment in a diffuse manner, whereas the directionable air vents (3) do so in a more powerful manner and oriented towards a specific area of the compartment.

The directionable air vents (3) are provided with slats (17) that can be oriented by operating the corresponding external controls (5).

The ventilator(1) also comprises external controls (6) that allow the driver or passenger to choose whether the air is to exit only through their corresponding directionable air vent (3), through their corresponding diffusing air vent (4), through both air vents (3, 4) simultaneously, or through neither of said air vents (3, 4). These external controls (6) regulate the functioning and the position of a series of panels inside the ventilator (1), which are not visible in the present figure but which are visible in detail in the following figures.

As can be seen in the figure, each diffusing air vent (4) comprises a diffusing front (18) provided with diffusing elements, these diffusing elements preferably being, and in the case of the figure, rounded holes (19) of sufficient size to emit sufficiently diffuse air and at the same time to prevent the excessive pressure loss and reduce the efficiency of the ventilator (1).

The central ventilator (1) of Figure 1 can be considered a duplication of a single ventilator or lateral ventilator, designed to emit air towards a single user and to be operated by a single user. In this respect, different embodiments of the invention are envisaged in which the ventilator (1) integrates any number greater than or equal to one of diffusing air vents (4) and any number greater than or equal to one of directionable air vents (3). For this reason, in the present invention a sub-assembly (21) is considered a fundamental unit of the ventilator (1), where the sub-assembly (21) is a part of the ventilator (1) that comprises a directionable air vent (3) and a diffusing air vent (4) adjacent to each other. In this way, a central ventilator (1) such as the one in Figure 1 generally comprises two sub-assemblies (21), whereas a lateral ventilator generally comprises one sub-assembly (21).

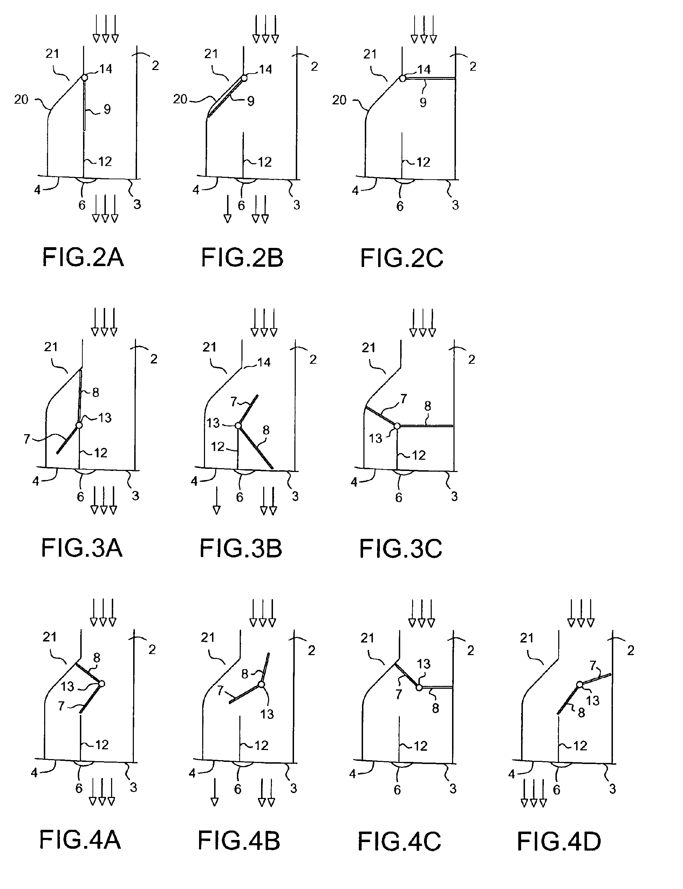

Figures 2A to 6D show five different embodiments of the sub-assembly (21) or fundamental unit of the inventive ventilator (1), with all the figures representing a top view of the interior of the sub-assembly (21), and being visible in said figures the common air passage space (2) and the diffusing air vent (4) and directionable air vent (3) adjacent to each other. These figures could therefore be extrapolated by means of duplication in order to create figures corresponding to a central ventilator (1) such as that of Figure 1. In addition, although in these figures the diffusing vent (4) has been represented on the left and the diffusing vent (3) on the right, it is clear that the invention also contemplates the opposite embodiment, with the diffusing vent (4) on the right and the diffusing vent (3) on the left.

In some of these figures, the sub-assembly (21) represented comprises an inner wall (12) that separates the directionable air vent (3) from the diffusing air vent (4). Additionally, in all of them the diffusing and/or directional functioning mode of the sub-assembly (21) is selected by a single external control (6).

Figures 2A, 2B and 2C show three functioning modes of a first embodiment of the invention. In said embodiment, the sub-assembly (21) comprises a panel (9) the function of which is to regulate the passage of air through both the diffusing air vent (4) and the directionable air vent (3). Said panel (9) rotates in relation to a rotation axis (14) situated substantially on the outer wall (20) of the sub-assembly (21). The rotation of the panel (9) occurs when the user operates and rotates the external control (6), and the rotation of the external control (6) is transferred through a non-represented transmission mechanism to a rotation of the panel (9) in relation to the rotation axis (14). Figure 2A shows a first functioning mode of the sub-assembly (21), in which the external control (6) has been rotated to a position in which the panel (9) closes the passage of air towards the diffusing air vent (4). In this functioning mode, the sub-assembly (21) emits air through the directionable air vent (3) only. Figure 2B shows a second functioning mode of the sub-assembly (21), in which the external control (6) has been rotated to a position in which the panel (9) does not close the passage of air towards either air vent (3, 4), as a result of which the sub-assembly (21) emits air through both the directionable air vent (3) and the diffusing air vent (4). Figure 2C shows a third functioning mode of the sub-assembly (21), in which the external control (6) has been rotated to a position in which the panel (9) closes the common air passage space (2) and subsequently closes the passage of air towards both the diffusing air vent (4) and the directionable air vent (3). In this functioning mode, the sub-assembly (21) is closed and does not emit air through either of its vents (3, 4).

Figures 3A, 3B and 3C show three functioning modes of a second embodiment of the invention. In said embodiment, the sub-assembly (21) comprises two panels (7, 8) the function of which is to regulate the passage of air through both the diffusing air vent (4) and the directionable air vent (3). Said panels (7, 8) rotate in relation to a rotation axis (13) situated approximately at the end of the inner wall (12). The rotation of the panels (7, 8) occurs when the user operates and rotates the external control (6), and the rotation of the external control (6) is transferred through a non-represented transmission mechanism to a rotation of the panels (7, 8) in relation to the rotation axis (13). Figure 3A shows a first functioning mode of the sub-assembly (21), in which the external control (6) has been rotated to a position in which the panel (8) closes the passage of air towards the diffusing air vent (4). In this functioning mode, the sub-assembly (21) emits air through the directionable air vent (3) only. Figure 3B shows a second functioning mode of the sub-assembly (21), in which the external control (6) has been rotated to a position in which the panels (7, 8) do not close the passage of air towards either air vent (3, 4), as a result of which the sub-assembly (21) emits air through both the directionable air vent (3) and the diffusing air vent (4). Figure 3C shows a third functioning mode of the sub-assembly (21), in which the external control (6) has been rotated to a position in which the panel (7) closes the passage of air towards the diffusing air vent (4) and the panel (8) closes the passage of air towards the directionable air vent (3), as a result of which the sub-assembly (21) is closed and does not emit air through either of its vents (3, 4).

Figures 4A, 4B, 4C and 4D show four functioning modes of a third embodiment of the invention. This embodiment of the invention is similar to that of Figures 3A, 3B and 3C, with the exception that in the present embodiment the rotation axis (13) in relation to which the panels (7, 8) rotate is not situated on the inner wall (12) but in the middle of the common air passage space (2). Figures 4A, 4B and 4C show three functioning modes similar to those of Figures 3A, 3B and 3C, whereas Figure 4D shows a fourth mode of embodiment, in which the external control (6) has been rotated to a position in which the panel (7) closes the passage of air towards the directionable air vent (3). In this functioning mode, the sub-assembly (21) emits air through the diffusing air vent (4) only.

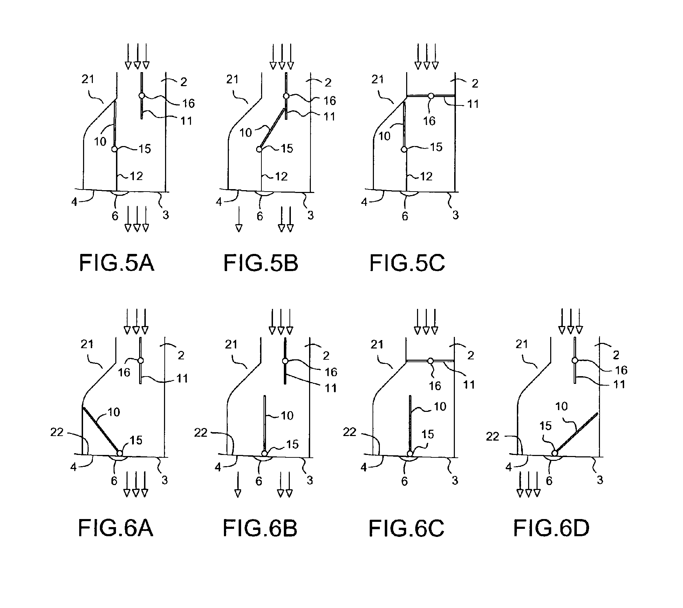

Figures 5A, 5B and 5C show three functioning modes of a fourth embodiment of the invention. In said embodiment, the sub-assembly (21) again comprises two panels (10, 11) the function of which is to regulate the passage of air through both the diffusing air vent (4) and the directionable air vent (3). However, in this case the panels (10, 11) rotate in relation to different rotation axes (15, 16). The panel (10) rotates in relation to a rotation axis (15) situated substantially at the end of the inner wall (12), whereas the panel (11) is a double-leaf panel that rotates in relation to a rotation axis (16) situated in the common air passage space (2). The non-represented transmission mechanism is designed to transfer the rotation of the external control (6) to the rotations of both panels (10, 11) in relation to different rotation axes (15, 16). Figure 5A shows a first functioning mode of the sub-assembly (21) in which the external control (6) has been rotated to a position in which the panel (10) closes the passage of air towards the diffusing air vent (4) and the panel (11) is in a position of minimum interference with the air flow that passes through the common air passage space (2). In this functioning mode, the sub-assembly (21) emits air through the directionable air vent (3) only. Figure 5B shows a second functioning mode of the sub-assembly (21) in which the external control (6) has been rotated to a position in which the panel (11) is in a position of minimum interference with the air flow that passes through the common air passage space (2), and the panel (10) does not close the passage of air towards the diffusing air vent (4). In this functioning mode, the sub-assembly (21) emits air through both the directionable air vent (3) and the diffusing air vent (4). Figure 5C shows a third functioning mode of the sub-assembly (21), in which the external control (6) has been rotated to a position in which the panel (11) closes the passage of air through the common air passage space (2) and towards any of the air vents (3, 4). In this functioning mode, the sub-assembly (21) is closed and does not emit air through either of its vents (3, 4).

Figures 6A, 6B, 6C and 6D show four functioning modes of a fifth embodiment of the invention. This embodiment of the invention is similar to that of Figures 5A, 5B and 5C, with the exception that in the present mode the sub-assembly (21) does not have an inner wall (12) but that the common air passage space (2) extends all the way to the directionable air vent (3) and the diffusing air vent (4). Additionally, the rotation axis (15) in relation to which the panel (10) rotates is situated at the end of the (22) common air passage space (2). Figures 6A, 6B and 6C show three functioning modes similar to those of Figures 5A, 5B and 5C, whereas Figure 6D shows a fourth mode of embodiment, in which the external control (6) has been rotated to a position in which the panel (10) closes the passage of air towards the directionable air vent (3). In this functioning mode, the sub-assembly (21) emits air through the diffusing air vent (4) only.

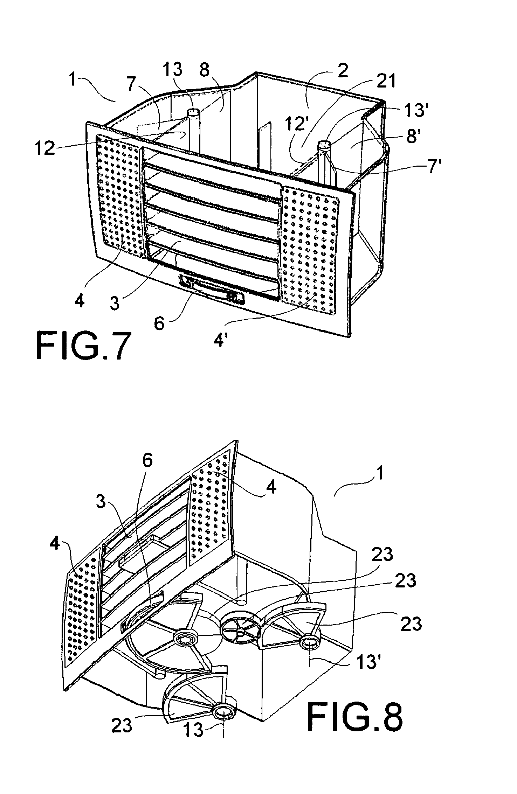

Figure 7 shows a perspective of a central ventilator(1), made up of a sub-assembly (21) that comprises one directionable air vent (3) and two diffusing air vents (4, 4'). Said sub-assembly (21) is of the type of sub-assembly (21) of Figures 3A to 3C, although in the present figure it comprises two diffusing vents (4). In addition, the sub-assembly (21) comprises an inner wall (12, 12') for each pair of vents (3, 4) made up of a diffusing air vent (4) and a directionable air vent (3) adjacent to each other; in other words, it comprises an inner wall (12) for the pair of vents (3, 4) and another inner wall for the pair of vents (3, 4'). The single external control (6) causes the rotation of the panels (7, 8, 7', 8') of the sub-assembly (21) in relation to the rotation axes (13, 13'). The transfer of the rotation of the external control (6) to a rotation of the panels (7, 8, 7', 8') occurs through any transmission system, for example, a transmission system based on gears (23) such as that represented in Figure 8.

## Claims

1. Ventilator (1) for the emission of air towards a compartment, **characterised in that** it comprises at least one sub-assembly (21) that comprises:
- a common air passage space (2) that transports the air towards the compartment,
- at least one directionable air vent (3), or air vent that directs the air originating from the common air passage space (2) towards a specific area of the compartment,
- at least one diffusing air vent (4), or air vent that emits the air originating from the common air passage space (2) towards the compartment in a diffuse manner,
- an external control (6), it being possible by means of operating said external control (6) to select the functioning mode of the ventilator (1) from between at least two of the following functioning modes: a first mode in which the air comes out through the directionable air vents (3) and not through the diffusing air vents (4), a second mode in which the air does not come out through the directionable air vents (3) but does through the diffusing air vents (4), a third mode in which the air comes out through both the directionable air vents (3) and the diffusing air vents (4), and a fourth mode in which the air does not come out either through the directionable air vents (3) or the diffusing air vents (4).

2. Ventilator (1), in accordance with claim 1, **characterised in that** the sub-assembly (21) also comprises at least one panel (7, 8, 9, 10, 11) for each pair of vents (3, 4) made up of one diffusing air vent (4) and one directionable air vent (3) adjacent to each other, where by operating the external control (6) the position of the panel (7, 8, 9, 10, 11) is configured for the suitable opening or closing of the diffusing air vent (4), the directionable air vent (3) and/or the common air passage space (2), so that the functioning mode of the sub-assembly (21) is selected.

3. Ventilator (1) in accordance with claim 2, **characterised in that** the sub-assembly (21) comprises two panels (7, 8) for each pair of vents (3, 4), where both panels (7, 8) rotate in relation to a same rotation axis (13).

4. Ventilator (1) in accordance with claim 3, **characterised in that** the sub-assembly (21) also comprises at least one inner wall (12) for each pair of vents (3, 4), and the rotation axis (13) is situated substantially at the end of said inner wall (12).

5. Ventilator (1) in accordance with claim 3, **characterised in that** the sub-assembly (21) also comprises at least one inner wall (12) for each pair of vents (3, 4), and the rotation axis (13) is not situated on said inner wall (12).

6. Ventilator (1) in accordance with claim 2, **characterised in that** the sub-assembly (21) comprises two panels (10, 11) for each pair of vents (3, 4), where both panels (10, 11) rotate in relation to different rotation axes (15, 16).

7. Ventilator (1) in accordance with claim 6, **characterised in that** the panel (10) performs the opening and closing of the diffusing air vent (4) and/or the directionable air vent (3), whereas the panel (11) performs the opening and closing of the common air passage space (2), with the rotation axis (16) in relation to which the panel (11) opening and closing the directionable air vent (3) rotates being situated in the common air passage space (2).

8. Ventilator (1) in accordance with claim 7, **characterised in that** the sub-assembly (21) also comprises at least one inner wall (12) for each pair of vents (3, 4), with the rotation axis (15) in relation to which the panel (10) opening and closing the diffusing air vent (4) and/or the directionable air vent (3) being situated substantially at the end of the inner wall (12).

9. Ventilator (1) in accordance with claim 7, **characterised in that** the rotation axis (15) in relation to which the panel (10) opening and closing the diffusing air vent (4) and/or the directionable air vent (3) rotates is situated at the end (22) of the common air passage space (2).

10. Ventilator (1) in accordance with claim 7, **characterised in that** the panel (11) is a double-leaf panel.

11. Ventilator (1) in accordance with claim 2, **characterised in that** the sub-assembly (21) comprises a panel (9) for each pair of areas (3, 4), with said panel (9) being used to open and close both the diffusing air vent (4) and the directional air vent (3), and where said panel (9) rotates in relation to a rotation axis (14).

12. Ventilator (1) in accordance with claim 11, **characterised in that** the sub-assembly (21) comprises an outer wall (20), and the rotation axis (14) of the panel (9) is situated substantially on said outer wall (20) of the sub-assembly (21).

13. Ventilator (1) in accordance with any of the preceding claims, **characterised in that** the diffusing air vent (4) comprises a diffusing front (18) provided with diffusing elements.

14. Ventilator (1) in accordance with claim 13, **characterised in that** the diffusing elements are holes (19).

15. Ventilator (1) in accordance with claim 14, **characterised in that** the holes (19) are round.
